# EUROPÄISCHE PATENTSCHRIFT

(11) **EP 2 082 907 B1**
(45) Veröffentlichungstag und Bekanntmachung des Hinweises auf die Patenterteilung: **02.03.2011**
(21) Anmeldenummer: 09006509.5
(22) Anmeldetag: 06.12.2005
(51) Int. Cl.: B60H 1/34, B60H 1/00, B60K 37/06, G05G 7/02, G05G 1/10

(54) **Vorrichtung zum Bewegen eines Verstellteils in einem Kraftfahrzeug**
Device for moving a positioning device in a motor vehicle
Dispositif pour déplacer un dispositif de positionnement dans un véhicule automobile

(43) Veröffentlichungstag der Anmeldung: 29.07.2009
(62) Teilanmeldung aus: 05026576.8
(73) Patentinhaber: Bayerische Motoren Werke Aktiengesellschaft, 80809 München (DE)
(72) Erfinder: Koelbl, Leopold, 85570 Ottenhofen/Herdweg (DE); Ostermeier, Ralph, 85395 Wolfersdorf (DE); Hofhaus, Joern, 85354 Freising (DE); Schroeter, Gunter, 81829 München (DE)

(56) Entgegenhaltungen:
- EP-A- 1 048 499
- DE-A1- 10 121 908
- DE-A1- 10 231 580
- DE-A1- 19 958 845
- US-A- 3 648 539
- US-A- 5 072 657

## Beschreibung

Die vorliegende Erfindung betrifft eine Vorrichtung zum Bewegen eines beweglichen Verstellteils in einem Kraftfahrzeug, umfassend ein wahlweise elektronisch gesteuert oder manuell durch einen Benutzer des Kraftfahrzeugs antreibbares Verstellteil, ein Bedienelement zum manuellen Bewegen des Verstellteils durch den Benutzer sowie gegebenenfalls Kopplungsmittel zur Übertragung eines auf das Bedienelement wirkenden Drehmoments bzw. einer auf das Bedienelement wirkenden Kraft auf das Verstellteil, und ein elektrisches Antriebselement mit zugehöriger Ansteuerelektronik zum elektronisch gesteuerten Bewegen des Bedienelements sowie gegebenenfalls Kopplungsmittel zur Übertragung eines durch das Antriebselement erzeugten Antriebsdrehmoments bzw. einer durch das Antriebselement erzeugten Antriebskraft auf das Verstellteil.

Zur Regulierung verschiedener Funktionen in modernen Kraftfahrzeugen ist es bekannt, bewegliche Verstellteile vorzusehen, die automatisch gesteuert und/oder durch einen Eingriff eines Fahrzeugnutzers in eine bestimmte Position und/oder Stellung gebracht werden können. Beispielsweise dienen die Lamellen eine Luftausströmers dazu, die Richtung des durch den Luftausströmer ausströmenden Luftstroms zu beeinflussen.

In der Regel ist zum manuellen Bewegen eines solchen Verstellteils durch den Benutzer im Fahrzeuginnenraum ein Bedienelement vorgesehen. In vielen Fällen bringt der Benutzer ein Drehmoment bzw. eine Kraft auf das Bedienelement auf, um das Verstellteil zu bewegen. Um dies zu ermöglichen, sind je nach Ausführungsform gegebenenfalls Kopplungsmittel zur Übertragung eines auf das Bedienelement wirkenden Drehmoments bzw. einer auf das Bedienelement wirkenden Kraft auf das Verstellteil vorzusehen. Als Bedienelement kann beispielsweise ein Rändelrad dienen.

Alternativ ist es bekannt, ein elektrisches Antriebselement zum elektronisch gesteuerten Bewegen eines Verstellteils vorzusehen. Die DE 10121908 A1 behandelt eine spezielle Ausführungsform einer solchen Vorrichtung. Zur

Übertragung eines durch das elektrische Antriebselement erzeugten Antriebsdrehmoments bzw. einer durch das elektrische Antriebselement erzeugten Antriebskraft auf das Verstellteil sind je nach Ausführungsform entsprechende Kopplungsmittel, z. B. ein Getriebe, vorzusehen. Die Ansteuerung eines elektrischen Antriebselements erfolgt üblicherweise über eine zugehörige Ansteuerelektronik. Diese kann in das Antriebselement selbst integriert oder separat ausgeführt sein. Typischerweise ist im Fahrzeuginnenraum zumindest ein Bedienelement. z.B. ein Wipptaster, angeordnet, durch welches das Verstellteil durch den Bediener elektrisch verstellbar ist. Alternativ oder zusätzlich ist eine automatische Verstellung des Verstellteils, beispielsweise durch die Verbindung der Ansteuerelektronik mit einer Recheneinheit, realisierbar.

Bekannt sind außerdem Vorrichtungen, in welchen ein Verstellteil wahlweise elektronisch gesteuert oder manuell durch einen Benutzer des Kraftfahrzeugs antreibbar ist. In einem solchen Fall sind sowohl ein elektrisches Antriebselement für eine elektronisch gesteuert ausgeführte Bewegung als auch ein Bedienelement zur manuellen Bedienung vorzusehen. Gemäß dem Stand der Technik sind solche Vorrichtungen in der Regel so konzipiert, dass das elektrische Antriebselement gerätetechnisch von dem Bedienelement für die manuellen Bedienung entkoppelt ist. **Eine solche Vorrichtung ist beispielsweise aus der** EP 1048499 A1 **bekannt.** Eine solche Ausführung weist jedoch verschiedene Nachteile auf. Zum einen bleibt hierdurch häufig Bauraum, beispielsweise ein Hohlraum des Bedienelements ungenutzt. Zum anderen müssen häufig sowohl Kopplungsmittel zur Übertragung eines auf das Bedienelement wirkenden Drehmoments bzw. einer auf das Bedienelement wirkenden Kraft auf das Verstellteil als auch Kopplungsmittel zur Übertragung eines durch das elektrische Antriebselement erzeugten Antriebsdrehmoments bzw. einer durch das Antriebselement erzeugten Antriebskraft auf das Verstellteil vorgesehen werden. Ferner wird durch die entkoppelte Ausführung von Bedienelement und Antriebselement bzw. durch die Bereitstellung der benötigten Kopplungsmittel in vielen Fällen die Montage einer entsprechenden Vorrichtung erschwert.

Zudem ist durch eine Lösung gemäß dem Stand der Technik in vielen Fällen die Gestaltungsfreiheit des Verstellteils bzw. dessen Antriebskonzept eingeschränkt. Wenn beispielsweise ein verschwenkbares Verstellteil sowohl durch ein manuelles Bedienelement als auch durch ein separat davon ausgeführtes elektrisches Antriebselement antreibbar sein soll, muss das Verstellteil beispielsweise so gelagert werden, dass sowohl durch das Aufbringen einer Kraft- und/oder eines Drehmoments an einem ersten Angriffspunkt, beispielsweise an der Vorderseite des Verstellteils, als auch an einem zweiten Angriffspunkt, beispielsweise an der Rückseite, eine Verschwenkung erreichbar ist. Hierzu ist beispielsweise eine aufwändige Lagerung drehbar um eine Mittelachse erforderlich. Zudem müssen verschiedene Abschnitte des Verstellteils, beispielsweise rund um die beiden Angriffspunkte, derart robust ausgeführt werden, dass das Verstellteil durch die Einwirkung der jeweiligen Elemente und/oder Kopplungsmittel nicht beschädigt werden kann.

Wenn das elektrische Antriebselement, ggf. über Kopplungsmittel, fest mit dem Verstellteil verbunden ist, wird es im Falle einer vom Benutzer über das manuelle Bedienelement erzeugten Bewegung mitbewegt. Bei ungünstig aufeinander abgestimmten Antriebsmechanismen können dabei gemäß dem Stand der Technik sehr hohe Kräfte und/oder Drehmomente auf das elektrische Antriebselement, auf das Verstellteil und/oder auf Kopplungsmittel verursacht werden. Die Berücksichtigung solcher Kräfte und/oder Drehmomente in der Auslegung des Systems wird häufig dadurch erschwert, dass diese von der aktuellen Betriebssituation, beispielsweise der aktuellen Winkelstellung eines rotatorischen elektrischen Antriebselements, abhängen, Im ungünstigsten Fall können kinematische Singularitäten auftreten, sodass eine Bewegung des manuellen Bedienteils nicht ohne Beschädigung des elektrischen Antriebselements, des Verstellteils und/oder von Kopplungsmitteln möglich ist. Die konsequente Vermeidung von hohen Kräften und Singularitäten schränkt die Gestaltungsfreiheit des Verstelltells bzw. dessen Antriebskonzept weiter ein.

DE 102 31 580 A1 offenbart eine Verbindung eines elektrischen Antriebs mit einem Stellrad zur manuellen Verstellung von Lüftungslamallen über ein Getriebe.

Aufgabe der vorliegenden Erfindung ist es, eine einfache und platzsparende Vorrichtung zu schaffen, bei welcher ein bewegliches Verstellteil in einem Kraftfahrzeug wahlweise elektronisch gesteuert durch ein elektrisches Antriebselement oder manuell bewegt werden kann.

Gelöst wird diese Aufgabe erfindungsgemäß durch eine Vorrichtung gemäß Anspruch 1.

Vorteilhafte Ausführungsformen und Weiterbildungen der Erfindung ergeben sich aus den abhängigen Ansprüchen.

Gemäß der Erfindung wirkt eine Antriebskraft bzw. das Antriebsdrehmoment des Antriebselements über das Bedienelement auf das Verstellteil. Es wird also eine von dem elektrischen Antriebselement zum Zweck der Bewegung des Verstellteils erzeugte Antriebskraft bzw. ein erzeugtes Antriebsdrehmoment auf das Bedienelement aufgebracht und von diesem Bedienelement auf das Verstellteil übertragen. Diese Übertragung vom Bedienelement auf das Verstellteil erfolgt gegebenenfalls in an sich bekannter Weise über entsprechende Kopplungsmittel.

Die Erfindung sieht für die aufgabengemäß gewünschte elektronisch gesteuerte Bewegung durch das elektrische Antriebselement gewissermaßen eine mechanische Reihenschaltung zwischen dem elektrischen Antriebselement und dem Bedienelement vor. Eine manuelle Bewegung ist weiterhin möglich und kann durch direkte Einwirkung des Bedieners auf das Bedienelement verursacht werden. Das Verstellteil ist somit sowohl manuell als auch elektronisch gesteuert bewegbar.

Ein Vorteil der Erfindung besteht darin, dass der in einer Anwendung zur Verfügung stehende Bauraum besser ausgenutzt werden kann. Beispielsweise kann das Antriebselement und/oder die zugehörige Ansteuerelektronik in einen Hohlraum des Bedienelements eingefügt sein.

Gemäß einer ersten bevorzugten Ausführungsform der vorliegenden Erfindung ist das Antriebselement zumindest teilweise in einem Hohlraum des Bedienelements angeordnet. Die Vorrichtung kann dadurch platzsparend ausgeführt werden. Zudem kann die Montierbarkeit einer erfindungsgemäßen Vorrichtung auf diese Weise verbessert werden. Insbesondere kann eine stabile Montage des Antriebselements an das Bedienelement (oder umgekehrt) bereits vor dem Einbau ins Kraftfahrzeug erfolgen.

Gemäß einer besonders bevorzugten Variante dieser ersten bevorzugten Ausführungsform der vorliegenden Erfindung ist das Antriebselement vollständig in einem Hohlraum des Bedienelements angeordnet. Daraus ergibt sich ein besonders geringer Platzbedarf der Vorrichtung. Die Vorrichtung kann zudem besonders einfach montiert werden. Das Bedienelement mitsamt integriertem Antriebselement kann dann beispielsweise in nahezu der gleichen Art und Weise in das Kraftfahrzeug montiert werden wie ein herkömmliches Bedienelement. Etwa kann es hierzu einfach auf eine kraftfahrzeugfeste Achse aufgesteckt werden.

Gemäß einer zweiten bevorzugten Ausführungsform der vorliegenden Erfindung ist die Ansteuerelektronik zumindest teilweise in einem Hohlraum des Bedienelements angeordnet. Gleichzeitig kann die Ansteuerelektronik zumindest teilweise in einem Hohlraum des Antriebselements angeordnet sein. Die zweite bevorzugte Ausführungsform ist optional mit der ersten bevorzugten Ausführungsform kombinierbar. Durch die Anordnung der Ansteuerelektronik in einem Hohlraum des Bedienelements kann die Vorrichtung platzsparend ausgeführt werden. Die Ansteuerelektronik kann in einem Hohlraum des Bedienelements ferner besonders gut vor mechanischen und anderen, z.B. thermischen, Einflüssen geschützt sein. Auch eine Wärmeabfuhr von der Ansteuerelektronik an bzw. über das Bedienelement kann gewollt sein. Zudem kann die Montage einer erfindungsgemäßen Vorrichtung besonders einfach gesehen, da eine stabile Montage der Ansteuerelektronik an das Bedienelement bereits vor dem Einbau ins Kraftfahrzeug erfolgen kann.

Bevorzugt ist das Antriebselement lösbar oder unlösbar mechanisch mit dem Bedienelement verbunden. Beispielsweise kann das Antriebselement bzw. ein Teil desselben, insbesondere der Rotor eines rotatorischen Antriebselements, in das Bedienelement bzw. einen Teil desselben eingepasst oder von diesem umspritzt sein. Eine mechanische Verbindung zwischen Antriebselement und Bedienelement stellt eine sichere Kraft- bzw. Momentenübertragung sicher.

Eine solche mechanische Verbindung zwischen Antriebselement und Bedienelement, insbesondere in Kombination mit einer zumindest teilweisen, idealerweise vollständigen, Anordnung des Antriebselements in einem Hohlraum des Bedienelements, ergibt ein einziges integriertes Bauteil, woraus sich hinsichtlich Montage, Logistik und Entwicklung wesentliche Vorteile ergeben. Gegebenenfalls kann besonders vorteilhafterweise auch die Ansteuerelektronik bereits in einem solchen integrierten Bauteil enthalten sein.

Da im Fall einer festen Verbindung zwischen Antriebselement und Bedienelement das Antriebselement bzw. dessen fest mit dem Bedienelement verbundener Teil jeder Bewegung des Letzteren folgt, ist das Antriebselement und/oder die Ansteuerelektronik dann so auszuführen, dass durch die erzwungene Bewegung keine Beschädigung des Antriebselements und/oder der Ansteuerelektronik entsteht.

Falls erforderlich, können alternativ zwischen Antriebselement und Bedienelement Kopplungsmittel, etwa eine Rutschkupplung vorgesehen werden. Das Antriebselement bzw. dessen fest mit dem Bedienelement verbundener Teil folgt dann nicht notwendigerweise jeder Bewegung des Bedienelements. Eine übermäßige Belastung des Antriebselements und/oder der Ansteuerelektronik kann somit vermieden werden. Solche Kopplungsmittel sind technisch mit sehr geringem Aufwand bereitstellbar. Insbesondere können solche Kopplungsmittel meist vorab montierbar ausgeführt werden. In Fällen, in welchen Kopplungsmittel zwischen Antriebselement und Bedienelement an das Antriebselement und/oder das Bedienelement vormontierbar sind, reduziert sich insbesondere der Aufwand der Montage unmittelbar ins Kraftfahrzeug.

Sofern Kopplungsmittel zwischen Antriebselement und Bedienelement vorgesehen werden, kann es besonders vorteilhaft sein, diese so auszuführen, dass zunächst eine belastbare mechanische Verbindung zwischen Antriebselement und Bedienelement besteht, diese aber gelöst oder gelockert wird, wenn ein Bediener im Rahmen einer manuellen Bedienung Druck auf das Bedienelement auslöst. Ein solcher Effekt kann durch den Einsatz von Federelementen einfach realisiert werden.

Als Alternative zu Kopplungsmitteln zwischen Antriebselement und Bedienelement können auch Kopplungsmittel zwischen Antriebselement und Kraftfahrzeug vorgesehen werden, um bei manueller Betätigung des Bedienelements eine übermäßige Belastung des Antriebselements und/oder der Ansteuerelektronik zu vermeiden. So kann etwa der Rotor eines rotatorischen Antriebselements fest und ohne Kopplungsmittel mit dem Bedienelement verbunden sein, während der Stator des rotatorischen Antriebselements über eine Rutschkupplung mit dem Kraftfahrzeug verbunden ist. Bei übermäßiger Belastung wird dann das gesamte Antriebselement (Stator und Rotor) mit dem Bedienelement mitbewegt. Eine Bewegung zwischen Stator und Rotor findet somit nicht oder nur in reduziertem Maße statt. Somit kann keine Beschädigung am Antriebselement oder der Ansteuerelektronik durch eine erzwungene Bewegung zwischen Stator und Rotor auftreten.

Ein wesentlicher Vorteil der Erfindung liegt darin, dass Kopplungsmittel zur Übertragung von Kräften oder Drehmomenten auf das Verstellteil in einer erfindungsgemäßen Vorrichtung lediglich für das Bedienelement vorgesehen werden müssen. Hingegen können Kopplungsmittel zur direkten Übertragung eines Antriebsdrehmoments oder einer Antriebskraft des elektrischen Antriebselement auf das Verstellteil entfallen. In den Fällen, in welchen Kopplungsmittel zur direkten Übertragung eines Antriebsdrehmoments oder einer Antriebskraft des elektrischen Antriebselement auf das Verstellteil entfallen können, wird der Gesamtaufwand der Montage im Zusammenhang mit einer erfindungsgemäßen Vorrichtung gegenüber dem Stand der Technik wesentlich verringert.

Die oben angestellten Überlegungen zur Reduzierung des Aufwands der Montage gelten weitestgehend gleichermaßen für Logistik und Entwicklung. Beispielsweise werden durch eine Verringerung der Anzahl der separat ins Kraftfahrzeug zu montierenden Komponenten auch die Bereitstellung der entsprechenden Komponenten zur Montage sowie deren Berücksichtigung im Produktentwicklungsprozess erleichtert.

Ein weiterer Vorteil der Erfindung besteht darin, dass gegenüber dem Stand der Technik eine größere Gestaltungsfreiheit des Verstellteils besteht bzw. eine größere Anzahl verschiedener Antriebskonzepte zur Bewegung des Verstellteils zur Auswahl steht. Beispielsweise muss für ein Verstellteil, welches in erfindungsgemäßer Art und Weise sowohl elektronisch gesteuert als auch manuell verschwenkbar ausgeführt ist, lediglich ein einziger Verstellmechanismus vorgesehen werden. Dieser muss nicht auf einen weiteren Verstellmechanismus abgestimmt werden. Zudem erfolgt eine Kraft- oder Momenteneinwirkung auf das Verstellteil nur über Angriffspunkte des manuellen Bedienelements bzw. der zugehörigen Kopplungsmittel. Im einfachsten Fall erfolgt eine Kraft- und/oder Momenteneinwirkung über einen einzigen Angriffspunkt. Das Verstellteil muss demzufolge lediglich mechanisch robust gegenüber Kraft- und/oder Momenteneinwirkung über solche Angriffspunkte ausgeführt werden. Neben einer größeren Gestaltungsfreiheit wird dadurch auch eine kostengünstigere und/oder haltbarere Realisierung gegenüber dem Stand der Technik ermöglicht.

Anders als bei Vorrichtungen gemäß dem Stand der Technik können bei einer erfindungsgemäßen Vorrichtung keine kinematischen Singularitäten auftreten, bei welchen etwa eine Bewegung des manuellen Bedienteils nicht ohne sehr hohe Kräfte auf das elektrische Antriebselement (und umgekehrt) möglich ist. Durch die Erfindung kann somit die Gefahr von Beschädigungen des elektrischen Antriebselements, des Verstellteils und/oder von Kopplungsmitteln verringert werden.

Gemäß der vorliegenden Erfindung ist das Antriebselement als Wanderwellenmotor ausgeführt. Solche Antriebselemente ermöglichen einen energiearmen und geräuscharmen Betrieb und besitzen eine sehr kompakte Bauform. Dadurch wird die angestrebte teilweise oder vollständige Integration des Antriebselements in das Bedienelement begünstigt. Beispielsweise kann der Stator des Wanderwellenmotor fahrzeugfest angebracht sein, während der Rotor am Bedienelement befestigt ausgeführt ist. Oder in umgekehrter Richtung: der Stator eines Wanderwellenmotors kann mit dem Bedienelement verbunden sein und mit diesem mitbewegt werden.

Das Bedienelement ist vorzugsweise, insbesondere bei verschwenkbaren Verstellteilen, als Rändelrad auszuführen. Bei einem solchen Rändelrad kann problemlos ein zur teilweisen oder vollständigen Aufnahme des Antriebselements geeigneter Hohlraum vorgesehen werden.

Durch unterschiedlichen Umgang mit einer Kraft- bzw. Momenteneinwirkung des Benutzers auf das Bedienelement können verschiedene technische Effekte erzielt werden. Prinzipiell kann das Antriebselement unabhängig von einer Kraft- bzw. Momenteneinwirkung des Benutzers auf das Bedienelement betrieben werden. Alternativ kann es so betrieben werden, dass es eine Kraft- bzw. Momenteneinwirkung des Benutzers auf das Bedienelement hemmt oder unterstützt. Die genannten Betriebsarten können situationsabhängig und/oder abhängig von Benutzereingaben aktivierbar sein. Durch eine Unterstützung der Kraft- bzw. Momenteneinwirkung des Benutzers auf das Bedienelement kann auch bei Vorhandensein mechanischer Reibung eine sehr leichtgängige Bedienbarkeit einer erfindungsgemäßen Vorrichtung realisiert werden. Durch eine Hemmung und/oder Unterstützung der Kraft- bzw. Momenteneinwirkung des Benutzers auf das Bedienelement kann eine gezielte haptische Rückmeldung an den Bediener realisiert werden.

Vorzugsweise ist eine elektronisch gesteuerte Bewegung des Verstellteils durch eine manuelle Bewegung überstimmbar. Unter Überstimmbarkeit ist in diesem Zusammenhang zu verstehen, dass eine Bewegung des Verstellteils, welche durch das Antriebselement ohne Benutzereingriff verursacht würde, durch eine Kraft- bzw. Momenteneinwirkung des Benutzers auf das Bedienelement gestoppt oder verändert werden kann.

Im einfachsten Fall besitzt eine erfindungsgemäße Vorrichtung keine Mittel zur sensorischen Erfassung einer Kraft- bzw. Momenteneinwirkung des Benutzers auf das Bedienelement. In einem solchen Fall ist eine erfindungsgemäße Vorrichtung vorzugsweise so ausgeführt, dass einerseits eine automatische Bewegung mit entsprechendem Kraft- oder Momentenaufwand auf das Bedienelement manuell überstimmbar ist und andererseits eine gewünschte manuelle Verstellung bei entsprechendem Kraft- oder Momentenaufwand jederzeit zugelassen wird. Vorzugsweise wird eine entsprechende Nachgiebigkeit im Antriebselement vorgesehen. Dies ist beispielsweise elegant und ohne die Gefahr einer Beschädigung durch ein Durchrutschen zwischen dem Stator und dem Rotor eines verwendeten Wanderwellenmotors realisierbar. Alternativ kann eine entsprechende Nachgiebigkeit, beispielsweise eine Rutschkupplung, in den Kopplungsmitteln zwischen Antriebselement und Bedienelement vorgesehen sein.

Vorzugsweise umfasst eine erfindungsgemäße Vorrichtung Mittel zur sensorischen Erfassung einer Kraft- bzw. Momenteneinwirkung des Benutzers auf das Bedienelement. Sofern eine erfindungsgemäße Vorrichtung Mittel zur sensorischen Erfassung einer Kraft- bzw. Momenteneinwirkung des Benutzers auf das Bedienelement besitzt, kann eine intelligente Ansteuerung des Antriebselements vorgesehen werden. Durch eine solche intelligente Ansteuerung sind vielfältige Effekte realisierbar. Das Überstimmen einer automatischen Bewegung durch einen Benutzereingriff kann bei Verfügbarkeit von Mitteln zur sensorischen Erfassung einer Kraft- bzw. Momenteneinwirkung des Benutzers im einfachsten Fall realisiert werden, indem die Bestromung des Antriebselements unterbrochen wird, sobald ein Benutzereingriff detektiert wird.

Als Mittel zur sensorischen Erfassung einer Kraft- bzw. Momenteneinwirkung des Benutzers auf das Bedienelement kommen verschiedene Sensoren in Frage. Beispielsweise kann ein Drehwinkelsensor eine Abweichung zwischen einer erwarteten und einer tatsächlichen Stellung des Antriebselements detektieren. Prinzipiell kann ein solcher Sensor eine Größe messen, welche auf das Antriebselement, das Bedienelement oder das Verstellteil bezogen ist. Alternativ zu gesondert vorzusehenden Sensormitteln kann eine Kraft- bzw. Momenteneinwirkung des Benutzers auf das Bedienelement durch eine Veränderung der Ansteuergrößen des Antriebselements, z. B. des Eingangsstroms eines Motors, detektierbar sein.

Für eine erfindungsgemäße Vorrichtung bestehen vielfältige Einsatzmöglichkeiten in Kraftfahrzeugen. Bevorzugt dient die Verstellung des in einer erfindungsgemäßen Vorrichtung enthaltenen Verstellteils zur Regulierung eines Luftstroms. Ebenso denkbar ist die wahlweise manuelle oder elektronisch gesteuerte Bewegung anderer beweglicher Verstellteile in einem Kraftfahrzeug. Denkbar ist etwa die Anwendung der Erfindung auf Lenkstockhebel (z. B. Fernlicht-Assistent), auf positionsverstellbare Lautsprecher, auf verschwenkbare Displays und auf Bedienregler der Mensch-Maschine-Schnittstelle(n) multifunktionaler Bedienkonzepte.

Anhand der beigefügten Zeichnungen wird die Erfindung weiter erläutert. Dabei zeigt
- Fig. 1: schematisch eine Verstelleinrichtung gemäß einer bevorzugten Ausführungsform der vorliegenden Erfindung zusammen mit einem Belüftungsgrill zur Belüftung des Innenraums eines Kraftfahrzeugs,
- Fig. 2: schematisch eine Seitenansicht einer Verstelleinrichtung gemäß einer bevorzugten Ausführungsform der vorliegenden Erfindung und
- Fig. 3: schematisch einen Querschnitt durch eine Verstelleinrichtung gemäß einer bevorzugten Ausführungsform der vorliegende Erfindung.

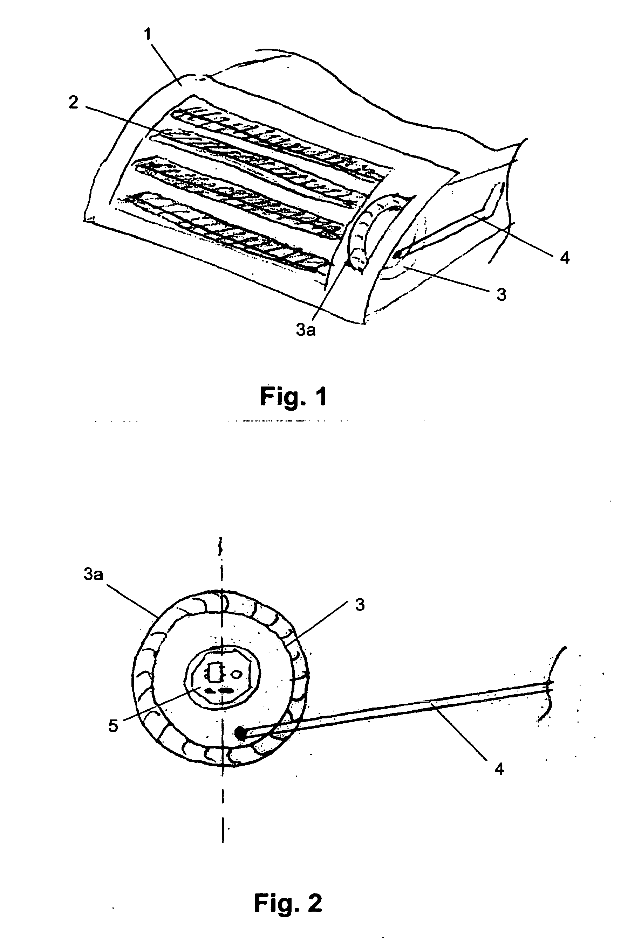

Die in Fig. 1 zusammen mit einem Belüftungsgrill 1 zur Belüftung des Innenraums eines Kraftfahrzeugs dargestellte Verstelleinrichtung ist zur wahlweisen manuellen oder elektronisch gesteuerten Bewegung der Lamellen 2 des Belüftungsgrills 1 vorgesehen. Die Lamellen 2 des Belüftungsgrills 1 dienen zur Regulierung eines Luftstroms in einem Kraftfahrzeug. Die Verstelleinrichtung umfasst ein Rändelrad 3 und Kopplungsmittel (hier einen Hebel 4) zur Übertragung eines auf das Rändelrad 3 wirkenden Drehmoments auf die Lamellen 2 des Belüftungsgrills 1.

Das Rändelrad 3 ragt teilweise aus der Front des Belüftungsgrills 1 heraus und kann, insbesondere durch Betätigung der gerippten Rändeloberfläche 3a, von einem Bediener manuell gedreht werden. Der Hebel 4 ist exzentrisch an dem Rändelrad 3 befestigt. Eine Drehung des Rändelrads 3 verursacht somit in an sich bekannter Weise über den Hebel 4 eine Bewegung der Lamellen 2.

Statt einer manuellen Betätigung kann das Rändelrad 3 auch mittels eines in das Rändelrad integrierten (in Fig. 1 und Fig. 2 nicht eigens abgebildeten) Antriebsmotors angetrieben werden. Der Antriebsmotor ist vollständig in einem Hohlraum des Rändelrads 3 angeordnet.

Fig. 2 zeigt schematisch eine Seitenansicht des Rändelrads 3 zusammen mit dem Hebel 4. In dieser Seitenansicht gemäß Fig. 2 ist auch eine Elektronikschaltung 5 zu erkennen. Die Elektronikschaltung 5 dient zur Ansteuerung des Antriebsmotors und ist fest an einem gegenüber dem Belüftungsgrill 1 unbeweglichen Teil des Antriebsmotors angebracht.

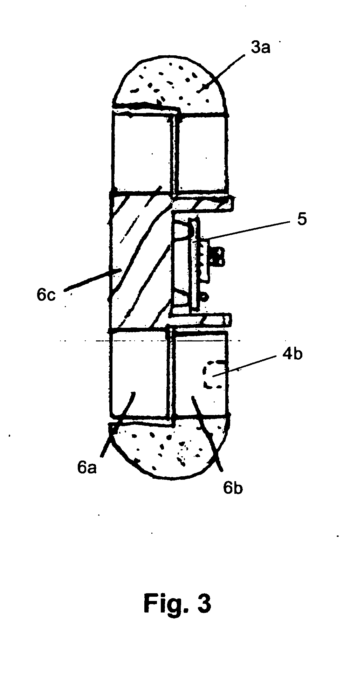

Fig. 3 zeigt schematisch einen Querschnitt durch das Rändelrad 3 mit integriertem Antriebsmotor und integrierter Ansteuerelektronik 5.

In Fig. 3 ist zu erkennen, dass Antriebsmotor und Elektronikschaltung 5 vollständig in dem Hohlraum des Rändelrads 3 angeordnet sind. In Fig. 3 ist nun auch der Antriebsmotor im Detail zu erkennen. Der Antriebsmotor umfasst im Wesentlichen einen Stator 6a und einen Rotor 6b.

Der Stator 6a ist fest mit dem Gehäuse des Belüftungsgrills 1 verbunden und ist diesem gegenüber somit unbeweglich. Die Befestigung des Stators 6a am Belüftungsgrill kann grundsätzlich nahezu beliebig erfolgen. Denkbar ist etwa eine Klemm-, Rast-, Klebe, Press- oder Schraubverbindung sowie ein Anspritzen. Der Stator 6a kann theoretisch direkt am Gehäuse angebracht werden. Im vorliegenden Fall findet ein fest mit dem Stator 6a verbundenes Mittelstück 6c Verwendung, welches seinerseits an dem Gehäuse des Belüftungsgrills 1 befestigt wird. Die Elektronikschaltung 5 ist ebenfalls an dem Mittelstück 6c angebracht und ist somit ebenfalls unbeweglich gegenüber dem Belüftungsgrill 1 und dem Stator 6a des Antriebsmotors.

Der Rotor 6b ist fest mit dem äußeren beweglichen Teil des Rändelrads 3, insbesondere der Rändeloberfläche 3a verbunden. Zum Herstellen dieser festen Verbindung kann der Rotor 6b in das Rändelrad durch eine Presspassung eingepasst werden. Denkbar ist auch eine Klebeverbindung oder ein Anspritzen bzw. Umspritzen. An dem Rotor 6b befindet sich eine Ausnehmung 4b zur Befestigung des Hebels 4.

Da der Rotor 6b mit dem äußeren beweglichen Teil des Rändelrads 3 verbunden ist, kann der Antriebsmotor 6a,6b, angesteuert über die Elektronikschaltung 5, das Rändelrad 3 antreiben. Das Rändelrad 3 kann somit auch elektronisch gesteuert durch den Antriebsmotor bewegt werden.

Über Verbindungsleitungen, die in den Abbildungen nicht eigens dargestellt sind, ist die Elektronikschaltung 5 mit einer Spannungsversorgung verbunden. Der Antriebsmotor 6a,6b erhält eine ausreichende Spannungsversorgung über die Elektronikschaltung 5. Die Elektronikschaltung 5 ist ferner mit einem Datenbus verbunden und ist geeignet, über diesen Datenbus Steuerbefehle, welche etwa eine Sollausrichtung der Lamellen 1 betreffen, zu empfangen. Die Steuerbefehle können dann durch eine geeignete Ansteuerung des Antriebsmotors 6a,6b umgesetzt werden. Durch eine geeignete Bewegung des Rotors 6b wird das Rändelrad 3, somit der Hebel 4 und somit die Lamellen 2 in die gewünschte Ausrichtung gebracht.

Gemäß den obigen Ausführungen kann das Rändelrad 3 wahlweise manuell durch eine Betätigung der Rändeloberfläche 3a oder elektronisch gesteuert durch den Antriebsmotor 6a,6b bewegt werden.

Im vorliegenden Fall ist der Antriebsmotor 6a,6b als Wanderwellenmotor ausgeführt. Bedingt durch das Wirkprinzip und den Aufbau eines solchen Motors ist ein manuelles "Überstimmen" einer Bewegung, die sich aus der Ansteuerung der Elektronikschaltung 5 ergibt, unschädlich. Der Rotor 6b wird dann gegenüber dem Stator 6a verdreht, sobald das manuell erzeugte Drehmoment größer ist als die Haftung bzw. Reibung zwischen Stator und Rotor. Ein solches Durchrutschen ist für den Wanderwellenmotor und seine Ansteuerelektronik unschädlich. Insofern eignet sich ein Wanderwellenmotor besonders für die Umsetzung der Erfindung.

Indem die Verdrehung zwischen Stator 6a mund Rotor 6b durch (hier nicht eigens grafisch dargestellte) Sensormittel erfasst wird, kann trotz eines solchen Durchrutschens eine absolute Winkelposition zwischen Stator 6a und Rotor 6b elektronisch gesteuert eingestellt werden.

## Patentansprüche

1. Vorrichtung zum Bewegen eines beweglichen Verstellteils (2) in einem Kraftfahrzeug, umfassend
ein wahlweise elektronisch gesteuert oder manuell durch einen Benutzer des Kraftfahrzeugs antreibbares Verstellteil (2), welches einen Luftstrom reguliert,
ein Bedienelement (3) zum manuellen Bewegen des Verstellteils durch den Benutzer sowie gegebenenfalls Kopplungsmittel (4) zur Übertragung eines auf das Bedienelement wirkenden Drehmoments bzw. einer auf das Bedienelement wirkenden Kraft auf das Verstellteil, und
ein elektrisches Antriebselement (6) mit zugehöriger Ansteuerelektronik (5) zum elektronisch gesteuerten Bewegen des Verstellteils sowie gegebenenfalls Kopplungsmittel zur Übertragung eines durch das Antriebselement erzeugten Antriebsdrehmoments bzw. einer durch das Antriebselement erzeugten Antriebskraft auf das Verstellteil,
wobei die Antriebskraft bzw. das Antriebsdrehmoment des Antriebselements über das Bedienelement auf das Verstellteil wirkt,
**dadurch gekennzeichnet,**
**dass** das Antriebselement als Wanderwellenmotor mit einem Stator und einem Rotor ausgebildet ist und
**dass** eine elektronisch gesteuerte Bewegung des Verstellteils durch eine manuelle Bewegung durch ein Durchrutschen zwischen dem Stator und dem Rotor überstimmbar ist.

2. Vorrichtung nach Anspruch 1, **dadurch gekennzeichnet,**
**dass** der Wanderwettenmotor in einem Hohlraum des Bedienelements angeordnet ist.

3. Vorrichtung nach einem der Ansprüche 1 oder 2, **dadurch gekennzeichnet,**
**dass** die Ansteuerelektronik in einem Hohlraum des Bedienelements angeordnet ist.

4. Vorrichtung nach einem der Ansprüche 1 bis 3, **dadurch gekennzeichnet,**
**dass** der Wanderwellenmotor lösbar oder unlösbar mechanisch mit dem Bedienelement verbunden ist.

5. Vorrichtung nach einem der Ansprüche 1 bis 4, **dadurch gekennzeichnet,**
**dass** das Bedienelement als Rändelrad ausgeführt ist.

6. Vorrichtung nach einem der Ansprüche 1 bis 5, **dadurch gekennzeichnet,**
**dass** der Wanderwellenmotor eine Kraft- bzw. Momenteneinwirkung des Benutzers auf das Bedienelement hemmt oder unterstützt

7. Vorrichtung nach einem der Ansprüche 1 bis 6, **dadurch gekennzeichnet,**
**dass** die Vorrichtung Mittel zur sensorischen Erfassung einer Kraft- bzw. Momenteneinwirkung des Benutzers auf das Bedienelement umfasst.

## Claims

1. A device for moving a movable adjustment part (2) in a motor vehicle, comprising an adjustment part (2) which can be selectively driven in an electronically controlled manner or manually by a user of the motor vehicle and which regulates an airflow, an operating element (3) for manually moving the adjustment part by the user and optionally coupling means (4) for transmitting a torque acting on the operating element or a force acting on the operating element to the adjustment part, and an electronic drive element (6) with an associated activation electronic system (5) for the electronically controlled moving of the adjustment part as well as optionally coupling means for transmitting a drive torque produced by the drive element or a drive force produced by the drive element to the adjustment part, the drive force or the drive torque of the drive element acting by means of the operating element on the adjustment part, **characterised in that** the drive element is configured as a travelling wave motor with a stator and a rotor and **in that** an electronically controlled movement of the adjustment part can be overruled by a manual movement by slipping between the stator and the rotor.

2. A device according to claim 1, **characterised in that** the travelling wave motor is arranged in a cavity of the operating element.

3. A device according to either of claims 1 or 2, **characterised in that** the activation electronics are arranged in a cavity of the operating element.

4. A device according to any one of claims 1 to 3, **characterised in that** the travelling wave motor is releasably or non-releasably mechanically connected to the operating element.

5. A device according to any one of claims 1 to 4, **characterised in that** the operating element is configured as a knurled wheel.

6. A device according to any one of claims 1 to 5, **characterised in that** the travelling wave motor inhibits or assists a force or torque action of the user on the operating element.

7. A device according to any one of claims 1 to 6, **characterised in that** the device comprises means to detect by sensor a force or torque action of the user on the operating element.

## Revendications

1. Dispositif pour déplacer une pièce réglable mobile (2) dans un véhicule automobile comprenant :
- une pièce réglable (2) commandée au choix électroniquement ou manuellement par l'utilisateur du véhicule et qui régule une veine d'air,
- un élément de manoeuvre (3) pour l'utilisateur pour déplacer manuellement la pièce réglable et le cas échéant un moyen de couplage (4) pour transmettre le couple agissant sur l'élément de manoeuvre ou une force appliquée à l'élément de manoeuvre pour la transmettre à la pièce réglable, et
- un élément d'entraînement électrique (6) avec une électronique de commande (5) correspondante pour déplacer de manière commandée électroniquement la pièce réglable et le cas échéant un moyen de couplage pour transmettre le couple d'entraînement en rotation généré par l'élément d'entraînement ou la force d'entraînement générée par l'élément d'entraînement, à la pièce réglable,
- la force d'entraînement ou le couple d'entraînement fournie par l'élément d'entraînement agissant sur la pièce réglable par l'intermédiaire de l'élément de manoeuvre,
dispositif **caractérisé en ce que**
- l'élément d'entraînement est un moteur à onde progressive comportant un stator et un rotor, et
- le mouvement à commande électronique de la pièce réglable peut être remplacé prioritairement par le mouvement manuel avec patinage entre le stator et le rotor.

2. Dispositif selon la revendication 1,
**caractérisé en ce que**
le moteur à onde progressive est logé dans la cavité de l'élément de manoeuvre.

3. Dispositif selon l'une des revendications 1 ou 2,
**caractérisé en ce que**
l'électronique de commande est logée dans une cavité de l'élément de manoeuvre.

4. Dispositif selon l'une des revendications 1 à 3,
**caractérisé en ce que**
le moteur à onde progressive est relié de manière amovible ou non amovible mécaniquement à l'élément de manoeuvre.

5. Dispositif selon l'une des revendications 1 à 4,
**caractérisé en ce que**
l'élément de manoeuvre est une roue moletée.

6. Dispositif selon l'une des revendications 1 à 5,
**caractérisé en ce que**
le moteur à onde progressive freine ou assiste l'action de la force ou du couple exercés par l'utilisateur sur l'élément de manoeuvre.

7. Dispositif selon l'une des revendications 1 à 6,
**caractérisé en ce que**
le dispositif comporte des moyens pour détecter par capteur, l'action de la force ou du couple exercés par l'utilisateur sur l'élément de manoeuvre.
